# EUROPEAN PATENT APPLICATION

(11) **EP 1 526 145 A1**
(43) Date of publication of application: **27.04.2005**
(21) Application number: 03078361.7
(22) Date of filing: 24.10.2003
(51) Int. Cl.: C08F 220/04, C08F 4/30, C08F 8/14, C09D 133/14

(54) **Process for the preparation of hydroxy functional polymer and its use in coating compositions**

(71) Applicant: Resolution Research Belgium S.A., 1348 Ottignies Louvain-la-Neuve (BE)
(72) Inventor: Heymans, Denis Marie Charles, 1348 Ottignies Louvain-la-Neuve (BE); Uytterhoeven, Griet, 1348 Ottignies Louvain-la-Neuve (BE); De Cock, Christian Jean Charles, 1348 Ottignies Louvain-la-Neuve (BE)

(57) **Abstract**

The present invention relates to a process for the preparation of hydroxy functional polymer and its use in coating compositions. More in particular the invention relates to a process comprising the radical polymerisation of ethylenically unsaturated monomers in presence of hydrogen peroxide. The said resin composition has to contain from 5 to 45 weight % of an unsaturated radical-polymerisable carboxylic acid. The acid functional made resin is subsequently reacted with a mono-epoxy functional derivative.

## Description

The present invention relates to a process for the preparation of hydroxy functional polymer and its use in coating compositions. More in particular the invention relates to a process comprising the radical polymerisation of ethylenically unsaturated monomers in presence of hydrogen peroxide.
The use of hydrogen peroxide as cheap source of radical initiator in a non-aqueous polymerisation medium is known in the art. The US patents, N° 3,370,050 and 3,366,605 disclosed the use of aqueous hydrogen peroxide as free radical initiator to produce polymeric resins of hydroxyalkyl esters of ethylenically unsaturated acid and unsaturated amides. This way of polymerisation led to polymers with relatively high molecular weight which were not suitable resins for top coat applications. The two Japanese Kokai N° 76045/1982 and N° 69206/1983 described a potential solution to produce polymeric resins with a lower molecular weight. Both processes suffer from the disadvantage of the use of high pressure or the use a non-aqueous solution of hydrogen peroxide. The US 4,600,755 seems to solve the above problems of high molecular weight and works under atmospheric conditions. According to US 4,600,755 the use of hydrogen peroxide insures that many of the polymeric molecules will have hydroxyl groups connected to the polymer. The feature of the said patent is that the hydrogen peroxide solution is added to the polymerising monomer component incrementally throughout the course of the polymerisation and low boiling organic solvents and water are simultaneously removed from reaction medium as the aqueous hydrogen peroxide solution is being added. So the object of the polymerisation process according to US 4,600,755 was to provide an efficient way to produce low molecular weight and hydroxyl functional curable resins, and more specifically the preparation of low molecular weight acrylic polymers in an organic diluent using aqueous peroxide as free radical initiator. However, it has been found that under the conditions of said US 4,600,755 and in the absence of hydroxyl-containing unsaturated monomers, copolymers are obtained which show no hydroxyl groups at all.

Therefore it is an object of the present invention to provide a process for the preparation of hydroxyl functional copolymers by radical polymerisation in presence of hydrogen peroxide without the need of incorporation of hydroxyl functional monomers.

As result of extensive research and experimentation, it has now surprisingly been found that an acid, hydroxyl functional copolymer can be prepared from a comonomer mixture which has to contain at least 5 weight % of an unsaturated radical-polymerisable carboxylic acid relative to the total weight of radical copolymerisable comonomers in order to obtained a copolymer wherein hydroxyl groups have been built in by the radical decomposition of hydrogen peroxide and carboxylic acid groups from the said comonomer. Particularly the said resin composition has to contain from 5 to 45 weight % of an unsaturated radical-polymerisable carboxylic acid and more particularly between 10 and 40 weight % to the total weight of radical copolymerisable comonomers.

The resin compositions have been found very suitable for use as a top coat on metal substrate. The said resin is curable with a curative which reacts with the hydroxyl functional groups. More particularly this invention relates to the use of hydrogen peroxide as radical initiator to generate primary hydroxyl functions in the said resin.

The resins used for coating applications are obtainable from the obtained acid, hydroxyl copolymer by a substantially conversion the said acid containing resin by a mono-epoxy compound to generate additional hydroxyl functional groups, which are curable with suitable cross-linking agents.
With the term "substantially conversion" as used throughout the present specification, is meant that the conversion of the carboxylic acid groups are converted with mono-epoxy compounds in such away that the final polymer contains 0.01 to 10 weight % of un-reacted acid groups derived from the unsaturated radical-polymerisable carboxylic acid used as commonomer .
Any suitable mono-epoxy compound can be used in the reaction with the acid groups of the initially prepared copolymer. Any alkyl or aryl mono-glycidyl ethers or alkyl glycidyl esters can be reacted with the acid groups present. Preferably alkyl glycidyl esters are used, which correspond to the general formula (I), 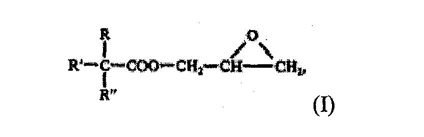 in which R,R',R" are independently hydrogen or aliphatic alkyl radicals of 1 to 10 carbon atoms, while the total number of carbon atoms of the three radicals (R+R'+R")being between 2 to 20, preferably between 3 to 13. These alkyl glycidyl esters are derived for example from 1-methylpropionic acid, 1-dimethyl-propionic acid (pivalic acid), iso-butyric acid, 1-methyl-propionic acid, 1-methyl-butyric acid, 1-dimethyl-butyric acid, VERSATIC acid, neodecanoic glycidyl ester and other glycidyl ester of alkanoic acids and mixture thereof and the like. The most preferred glycidyl ester is CARDURA E10P glycidyl ester, which derived from VERSATIC 10 carboxylic acid (CARDURA & VERSATIC are trademarks from Resolution Performance Products). The said glycidyl esters are obtainable by a well established manufacturing process such as disclosed in EP-1 115 714 B1.
According to a preferred embodiment of the process of the present invention, the starting comonomer mixture is substantially free from hydroxyl containing monomers.

The present invention acid-functional resins are produced starting from an ethylenically unsaturated monomers with at least 5 weight% of a copolymerisable unsaturated acid and in presence of aqueous hydrogen peroxide and a way to remove (eliminate) the water present or generated by decomposition the hydrogen peroxide. The elimination of the water of the reaction medium can be done by azeotropic distillation or distillation of an amphiphilic solvent together with the water and another way is to react the water with an anhydride.

More in particular according to one embodiment of the process of the present invention an anhydride is used to eliminate chemically the water, in order to avoid heterophase polymerisation conditions. The anhydride are preferably derived from alkyl, cycloalkyl, alkenyl, cycloalkenyl, aryl acids and alkyl, cycloalkyl, aryl unsaturated 1-2, diacids or the like, and a mixture thereof.
According to the present invention, the acid-functional resin is typically produced by heating ethylenically unsaturated monomers in presence of hydrogen peroxide. The reaction is carried out at a temperature between 60°C and 160°C, preferably from 80°C to 150°C and more preferably from 100°C to 140°C. The comonomers and the hydrogen peroxide are feed incrementally by two separate feeding ports.
If the anhydride is used to eliminate the water from the reaction medium then and if the anhydride is derived from alkyl, cycloalkyl, alkenyl, cycloalkenyl, aryl acids the in-situ formed acid is distilled out the reaction medium before the addition of the mono-epoxy compound. If the anhydride is derived from alkyl, cycloalkyl, aryl unsaturated 1,2- diacids then the diacid will be incorporated into the resin as comonomer, the subsequently addition of the mono-epoxy compound can take place without further distillation.
A catalyst for the acid-epoxy reaction can be added in the reactor before the addition of epoxy compounds. The catalyst which can be use in this invention is not especially limited. However, as examples, of such catalysts onium salts, heterocyclic amines, inorganic acid, and organic acid with a pKa ranging -1 to 3.9, and the like. The preferred catalysts are the organic acids with a pKa ranging from -0.5 to 3.5 and suitable catalyst can be selected from the group comprising para-toluenesulfonic acid, chloro acetic acid, dichloro acetic acid, trichloro acetic acid, trifluoro acetic acid, dimethylol propionic acid and the like and a mixture.thereof.
The copolymerisation and the reaction time of the conversion of the copolymer with the epoxy compound are usually being from 4 to 8 hours, and preferably 5 to 6 hours.

The said acid-functional resin composition has to contain from 5 to 45 weight % of an unsaturated radical-polymerisable carboxylic acid and more particularly between 10 and 40 weight % in the presence of hydrogen peroxide as radical initiator.
The co-monomer may be chosen from aromatic vinyl monomers, preferably styrene also, including substituted styrene such as alpha-substituted vinyl aromatic compounds including vinyl toluene, alpha-methylstyrene and the like. Beta substituted styrene compounds can also be used, such as stylbene, beta-methylstylbene, and the like.

Another class of suitable vinyl monomers are alpha-olefins with a carbon chain length of more than 10 and preferably those with 10 to 25 carbon atoms.
Vinyl ethers which contain alkyl, aryl or cycloaliphatic groups with a carbon chain length 5 to 15 and preferably from 5 to 10.
Vinyl esters such as vinyl acetate, benzoate and Versatate (e.g. VEOVA 10 or VEOVA 9 vinyl esters (VEOVA is a trademark ex RPP) and the like are suitable co-monomers to be used in the radical polymerisation step according to this invention.

Alkyl acrylate and/or an alkyl methacrylate, contains an alkyl group having from 1 to 12 carbon atoms, and preferably from 1 to 10 carbon atoms. Particularly suitable monomers of the group are selected from methyl-, ethyl-, propyl-, isopropyl, n-butyl, iso-butyl, isobornyl esters of acrylic acid or methacrylic acid. More preferred is methyl acrylate or methyl methacrylate, ethyl acrylate, ethyl methacrylate, n-butyl acrylate or n-butyl methacrylate.

However, other alkyl deficient monomers, such as symmetric or assymetric unsaturated diesters, diacid or anhydride e.g. alkyl maleate, alkyl fumarate, maleic acid or anhydride and fumaric acid and the like could be part of the co-monomer starting mixture.
It will be appreciated that another aspect of the present invention is formed by coating compositions comprising at least one hydroxyl functional copolymer prepared according to the present invention. Still another aspect is formed by coated articles bearing a layer of the hereinbefore specified coating composition.
Suitable cross-linking agents to be applied in the coating compositions of the present invention can be selected in general from blocked isocyanate groups containing compounds. Polyisocyanate may be aliphatic, cycloaliphatic, or heterocyclic and may be substituted or unsubstituted. For curing above 100°C the polyisocyanate is preferably a fully-capped (blocked) polyisocyanate with substantially no free isocyanate groups. The polyisocyanate is preferably aliphatic. Diisocyanates are preferred, although higher polyisocyanates can be used in place of or in combination with diisocyanates. Suitable isocyanates for curing at room temperature are described in "Polyurethanes for coating" (Ed. By Dr. Ulrich Zorll,author Dr. Manfred Bock; pages 109 to 150)which is included herein by reference.
Other types of hereinbefore specified cross-linking agents can be formaldehyde adducts derived from urea, melamine and benzoguanamine, or the etherified formaldehyde-amine adducts. Preferred cross-linking agents of the formaldehyde adduct-type are the melamine-formaldehyde adducts partially or completely etherified with aliphatic alcohols having 1 to 4 carbon atoms. Examples of such commercially available curing agents are: MAPRENAL MF900, VMF3296 and CYMEL 303, 327 and 1158 curing agents (MAPRENAL, VMF and CYMEL are trademarks).
The cross-linking reaction can be catalyzed by addition of an organometallic compound, such as tin compounds, and if desired tertiary amines, preferably diethyl ethanol amine. Examples of appropriate tin compounds are di-butyl tin di-laurate, di-butyl tin acetate and di-butyl oxo-tin.

### Test description and analytical methods:

Hydroxyl value: according to ASTM E222.
Because of the chemical nature of the polymer of this invention and more specifically the presence of acid groups in the polymeric chain the real hydroxyl value of the polymer is the value obtained according to ASTM E222 of which the value obtained by ISO 3682-96(see below) is subtracted.

Acid value: according to ISO 3682-96
Molecular weight determination:
*General*: General information on liquid exclusion chromatography can be obtained from ASTM D3016; standard practice for use of liquid exclusion chromatography terms and relationships.
*Scope:* This method describes the determination of the molecular size distribution characteristics of acrylic copolymer resins.
*For the correlation, the following standards are used:* polystyrene standards, covering the relative molecular mass range from about 5000 to 3000000 the following Toya Soda standards are recommended: A-5000, F-1, F-2, F-4, F-10, F-20, F-40, F-80, F128, F-288 and 1-phenylhexane.

### Method conditions:

- PL (Polymer Laboratories) columns were used.
- Short column set : small pre-column and 3 columns of 30 cm PL-gel 5 micron: mixed C + 2X mixed D
- Column oven at 40°C
- Mobile phase: THF at 0.8ml/min
- UV- and RI detector

Samples were dissolved in THF. Mn, Mw, Peak and Mwd are quoted.
Solids content: according to ASTM D2369-92
Volatile organic content (VOC): according to ASTM D 3960-96 Pendulum damping test (Koenig hardness): according to
ISO 1522-73(E) or DIN 53 157
Resistance of coatings against acid Method summary:

The acid resistance is determined by exposing the film to droplets of 0.6N sulphuric acid for 30, 60 and 90 minutes at 50°C and assessing the resulting damage to the film. Minimum score (per spot) is 0 (very poor), maximum score is 10 (not affected), and the three scores are then added together. The acid resistance was measured on coatings cured at room temperature and cured at 60°C for 30 minutes.
MEK resistance (MEK) Summary of the method:
A piece of cotton wool, soaked with MEK, is rubbed over the coating (using a pressure of around 2 kg). If the coating surface has been rubbed one hundred times up and down without showing any damage, the coating is said to be fully cured. If, after x "double MEK rubs", the coating has been destroyed on a full line going from the top to the bottom of the panel, the coating is said to fail after x "double MEK rubs". The MEK resistance was measured on coatings cured at room temperature and cured at 60°C for 30 minutes.

Measurement of the resistance to cracking-rapid deformation (Impact test /Kugelschlagprufung/ Falling Weight test): according to ISO 6272-93(E).
Measurement of resistance to cracking-gradual deformation (Erichsen Slow Penetration test or Cupping test)
According to: ISO 1520-73(E)
Viscosity of Newtonian systems using a Brookfield viscometer: ISO 2555-89

The invention is illustrated in more detail in the following examples, however without restricting its scope to these specific embodiments. All percentages are contents by mass weight and all parts are parts by mass weight, unless expressly stated otherwise.

### EXAMPLES

### Example 1

Equipment: Glass reactor equipped with an anchor stirrer, thermocouple, dean stark with reflux condenser and nitrogen flush.

### Manufacturing procedure:

The initial reactor charge (IRC), being the solvent and 1% of the total initiator content, were heated till 140°C. At that temperature the monomers and the initiator were added in a separate feed during 30 minutes. An azeotropic mixture was formed by the water and the solvent and distilled off. The temperature was kept for 40 minutes at 140°C for the post-reaction.

| | |
|---|---|
| *Solvent IRC:* | *62.1g xylene (=31% on comonomers)* |
| *H*_{*2*}*O*_{*2*} *in IRC* | *2g (1% of total initiator conc.)* |
| *Monomer feed:* | |
| *Methacrylic acid* | *40 (=20% on comonomers)* |
| *Styrene* | *82 (=41% on comonomers)* |
| *Methylmethacrylate* | *78 (= 39% on comonomers)* |
| *Catalyst* | *NO* |
| *Initiator feed :* | *12g (=7% - (1% of IRC) on* |
| *H*_{*2*}*O*_{*2*} *(50% aqueous)* | *comonomers)* |

### Example 2

Equipment: Glass reactor equipped with an anchor stirrer, thermocouple, dean stark with reflux condenser and nitrogen flush.

### Manufacturing procedure:

1^{st} part: The initial reactor charge, being the solvent and 1% of the total initiator content, were heated till 140°C. At that temperature the monomers together with the catalyst was added during 30 minutes. The initiator was added in a separate feed simultaneously. An azeotropic mixture was formed by the water and the solvent and distilled off. The temperature was kept for 40 minutes at 140°C for the post-reaction. Intermediate of example 2.
2^{nd} part: After this 1^{st} part of the reaction the remaining acid groups are scavenged, whilst keeping the temperature at the same temperature, by adding the equimolar amount of epoxy-compound (CARDURA E10P) in order to arrive at a low acid level.

| | |
|---|---|
| *Solvent IRC:* | *62.1g methyl amyl ketone (=31% on comonomers)* |
| *H*_{*2*}*O*_{*2*} *in IRC* | *2g (1% of total ini tiator conc.)* |
| *Monomer feed:* | |
| *Methacrylic acid* | 40 *(=20% on comonomers)* |
| *Styrene* | *82 (=41% on comonomers)* |
| *Methylmethacrylate* | 78 (= *39% on comonomers)* |
| *Catalyst:pTSA* | *1g (=0.5% on comonomers)* |
| *Initiator feed:H*_{*2*}*O*_{*2*} *(50% aqueous)* | *12g (=7%-(1% of TRC) on comonomers)* |
| *Acid scavenging:CARDURA E10P* | *112.4g* |

### Comparative example 1

According to US 5,470,930 example 3, but without hydroxypropyl acrylates (HPA) and kept the same amount of acrylic acid. HPA replaced butyl-methacrylate(BMA).
Equipment: Glass reactor equipped with an anchor stirrer, thermocouple, dean stark with reflux condenser and nitrogen flush.

### Manufacturing procedure:

The initial reactor charge, being the solvent and 1% of the total initiator content, were heated till 150°C. At that temperature the monomers and the initiator were added simultaneously in a separate feed during 300 minutes. An azeotropic mixture was formed by the water and the solvent and distilled off. The temperature was kept for 30 minutes at 150°C for the post-reaction.

| | |
|---|---|
| *Solvent IRC:* *H*_{*2*}*O*_{*2*} *in IRC* | *133.3g methyl amyl ketone (=66.7% on comonomers)* *3.5g (1% of total initiator conc.)* |
| *Monomer feed:* | |
| *Hydroxypropylacrylate* | *0* |
| *Styrene* | *40 (=20% on comonomers)* |
| *Butylacrylate* | *38 (=19% on comonomers)* |
| *Butylmethacrylate* | *117 (=58.5% on comonomers)* |
| *Acrylic acid* | *4 (=2% on comonomers)* |
| *Methylmethacrylate* | *1 (=0.5% on comonomers)* |
| *Catalyst* | *No* |
| *Initiator feed: H*_{*2*}*O*_{*2*} *(50% aqueous)* | *31.7g (=17.6%-(1% of IRC) on comonomers)* |

Measured hydroxyl value of the acrylic acid intermediate polymers is done according to ASTM E222. Because of the chemical nature of the polymer (presence of acid and hydroxyl groups) the real hydroxyl value of the polymer is the value obtained according to ASTM E222 of which the value obtained by ISO 3682-96(measure of the acid groups only) is subtracted.

| Polymer | Hydroxyl value |
|---|---|
| Example 1 | 68 mg KOH/g (on solids) |
| Intermediate of example 2 | 87 mg KOH/g (on solids) |
| Comparative example 1 | about 0 mg KOH/g. |

The measured values of the polymers according to the invention (example 1 and intermediate of example 2) are significantly higher than the polymer according to the prior art.

## Claims

1. A process for the preparation of hydroxy functional copolymer comprising a radical copolymerisation of ethylenically unsaturated (co)monomers comprising at least 5 weight % of an ethylenically unsaturated radical-polymerisable carboxylic acid relative to the total of comonomers in the presence of aqueous hydrogen peroxide, and subsequent substantially conversion of the obtained acid, hydroxy functional copolymer with a glycidyl ether or glycidyl ester.

2. Process according to claim 1 **characterised in that** the polymer composition comprises from 5 to 45 weight % of an ethylenically unsaturated radical-polymerisable carboxylic acid.

3. Process according to claims 1 and 2 **characterised in that** the starting comonomer mixture is substantially free from hydroxyl containing comonomers.

4. Process according to claims 1 to 3 wherein the comonomers are selected from acrylic acid, methacrylic acid, alkyl acrylate, alkyl methacrylate and vinyl aromatic and mixtures thereof, wherein the alkylgroups have from 1 to 4 carbon atoms.

5. Process according to claims 1 to 4 **characterised in that** the alkyl glycidyl esters used, which correspond to the general formula (I), 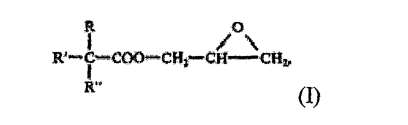 in which R,R',R" are independently hydrogen or aliphatic alkyl radicals of 1 to 10 carbon atoms, while the total number of carbon atoms of the three radicals (R+R'+R") being between 2 to 20, preferably between 3 to 13.

6. The process according to claims 1 to 5 **characterised in that** the water is removed from the copolymerisation by azeotropic distillation.

7. The process according to claims 1 to 5 **characterised in that** the water is removed during the copolymerisation by means of an acid anhydride.

8. The process according to claim 7 **characterised in that** the acid anhydride has been derived from alkyl, cycloalkyl, alkenyl, cycloalkenyl, aryl acids and alkyl, cycloalkyl, aryl unsaturated 1-2, diacids or the like, and a mixture thereof.

9. Coating compositions, comprising at least one hydroxyl functional copolymer obtained by the process of claims 1 to 8.

10. Coated articles comprising a layer of a coating composition of claim 9.
